# EUROPEAN PATENT APPLICATION

(11) **EP 4 683 213 A1**
(43) Date of publication of application: **21.01.2026**
(21) Application number: 24843433.4
(22) Date of filing: 11.07.2024
(51) Int. Cl.: H02S 50/00, H02S 40/32

(54) **SOLAR MODULE CONTROL DEVICE, SOLAR MODULE MANAGEMENT DEVICE, AND CONTROL METHOD THEREOF**

(30) Priority: 20.07.2023 KR 20230094506
(71) Applicant: Hanwha Solutions Corporation, Jung-gu Seoul 04541 (KR)
(72) Inventor: KIM, Young Min, Seoul 04541 (KR); NOH, Hong Il, Seoul 04541 (KR); KIM, Hyun Gon, Seoul 04541 (KR); HONG, Dahyun, Seoul 04541 (KR); PARK, Dong-il, Seoul 04541 (KR); YUN, Ju Hwan, Seoul 04541 (KR)
(74) Representative: Mooser, Sebastian Thomas
(86) International application number: PCT/KR2024/009978
(87) International publication number: WO 2025/018715

(57) **Abstract**

A device according to an aspect includes a communication unit configured to communicate with an external device, a shutdown unit configured to perform rapid shutdown of a photovoltaic module, and a processor connected to the communication unit and the shutdown unit, wherein the processor may be configured to identify a type of signal received through the communication unit and to control the shutdown unit to perform rapid shutdown of the photovoltaic module in case that the type of identified signal is a rapid shutdown signal.

## Description

### Technical Field

The present disclosure relates to a photovoltaic module control device, a photovoltaic module management apparatus, and methods of controlling the device and the apparatus, which are applied to photovoltaic power generation systems.

### Background Art

A photovoltaic power generation system is a system that converts solar energy into electrical energy and supplies the electrical energy, and includes photovoltaic panels that generate electricity through solar power, an inverter that converts direct current power generated by the photovoltaic panels into alternating current power, a battery that stores electrical energy generated by the photovoltaic panels, and the like.

Meanwhile, to minimize damage to a photovoltaic power generation system caused by abnormal situations such as fire, a combiner box is installed. In the combiner box, various sensors, protectors, and circuit breakers are installed to detect abnormal situations and prevent the spread of damage when abnormal situations occur. Due to the installation of various equipment in the combiner box, installation costs for a photovoltaic power generation system increase.

In addition, when power from photovoltaic panels is cut off at the combiner box due to an abnormal situation, monitoring of photovoltaic modules cannot be performed.

Therefore, a method is needed to control photovoltaic modules more quickly and easily when abnormal situations such as fire occur. In addition, a method is needed to perform monitoring of photovoltaic modules even when abnormal situations occur.

### Disclosure of Invention

### Technical Problem

The present disclosure is to provide a photovoltaic module control device, a photovoltaic module management apparatus, and methods of controlling the device and the apparatus.

### Solution to Problem

A device according to an aspect includes a communication unit configured to communicate with an external device, a shutdown unit configured to perform rapid shutdown of a photovoltaic module, and a processor connected to the communication unit and the shutdown unit, wherein the processor may be configured to identify a type of signal received through the communication unit and to control the shutdown unit to perform rapid shutdown of the photovoltaic module in case that the type of signal is a rapid shutdown signal.

An apparatus for managing a photovoltaic module control device, according to another aspect, includes a first communication unit configured to communicate with an external device, a second communication unit configured to communicate with a plurality of photovoltaic module control devices; and a processor connected to the first and second communication units, wherein the processor may be configured to: generate a monitoring request signal according to a preset period and transmits the monitoring request signal through the second communication unit; and in case that a warning signal is received through the first communication unit, stop the generation and transmission of the monitoring request signal, generate a rapid shutdown signal, and transmit the rapid shutdown signal through the second communication unit.

A method of controlling a photovoltaic module management apparatus, according to another aspect, may include generating a monitoring request signal according to a preset period and transmitting the monitoring request signal to a plurality of photovoltaic module control devices, stopping the generation and transmission of the monitoring request signal and generating a rapid shutdown signal, in case that a warning signal is received from an external device, and transmitting the rapid shutdown signal to the plurality of photovoltaic module control devices.

### Brief Description of Drawings

FIG. 1 is a diagram illustrating an example of a photovoltaic power generation system according to an embodiment.
FIGS. 2 to 4 are flowcharts illustrating examples of communication processes of a photovoltaic power generation system according to an embodiment.
FIG. 5 is a diagram illustrating an example of a photovoltaic module management apparatus according to an embodiment.
FIGS. 6 and 7 are flowcharts illustrating examples of a method of controlling a photovoltaic module management apparatus, according to an embodiment.
FIG. 8 is a diagram illustrating an example of a photovoltaic module control device according to an embodiment.
FIGS. 9 to 11 are flowcharts illustrating examples of a method of controlling a photovoltaic module control device according to an embodiment.
FIG. 12 is a view illustrating an example of a power supply structure of a building in which photovoltaic modules are installed, according to an embodiment.

### Best Mode for Carrying out the Invention

A device according to an aspect includes: a communication unit configured to communicate with an external device; a shutdown unit configured to perform rapid shutdown of a photovoltaic module; and a processor connected to the communication unit and the shutdown unit, wherein the processor may be configured to identify a type of signal received through the communication unit and to control the shutdown unit to perform rapid shutdown of the photovoltaic module in case that the type of signal is a rapid shutdown signal.

### Mode for the Invention

The terms used in the embodiments are selected, as much as possible, from general terms that are widely used currently, but these terms may vary depending on intentions of those of ordinary skill in the art, precedents, emergence of new technologies, or the like. Also, in a particular case, terms that are arbitrarily selected by the applicant of the present disclosure may be used. In this case, the meanings of these terms may be described in detail in corresponding description parts of the disclosure. Accordingly, it should be noted that the terms used herein should be construed based on practical meanings thereof and the whole content of this specification, rather than being simply construed based on names of the terms.

In the entire specification, when an element is referred to as "including" another element, the element should not be understood as excluding other elements unless otherwise specifically stated, and the element may further include other elements.

Terms including ordinal numbers, such as "first" or "second," used herein may be used to describe various components or embodiments, but the components or embodiments should not be limited by these terms. These terms may be used to distinguish one component or embodiment from another component or embodiment.

Hereinafter, example embodiments of the present disclosure will be described in detail with reference to the accompanying drawings. The detailed description set forth below, with reference to the accompanying drawings, is intended to describe example embodiments of the present disclosure, and is not intended to represent only embodiments in which the present disclosure may be implemented. To clearly describe the present disclosure in the drawings, unnecessary parts unrelated to the description may be omitted, and the same reference numerals may be used for the same or similar components throughout the specification.

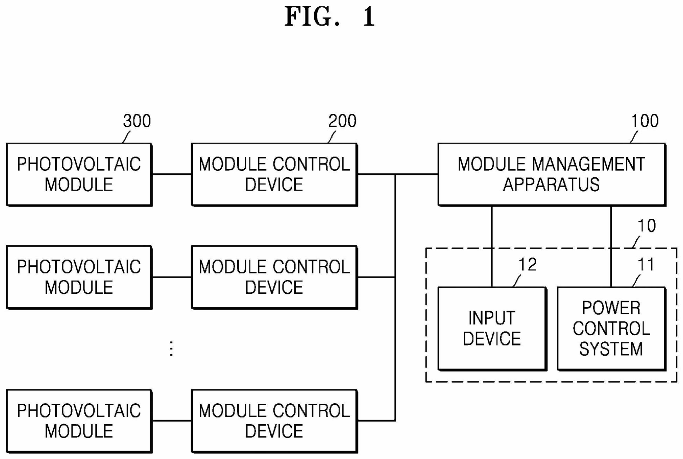

FIG. 1 is a diagram illustrating an example of a photovoltaic power generation system according to an embodiment.

Referring to FIG. 1, the photovoltaic power generation system may include an apparatus 100 for managing photovoltaic modules 300 (hereinafter, a module management apparatus), devices 200 for controlling the photovoltaic modules 300 (hereinafter, module control devices), and the photovoltaic modules 300. The photovoltaic power generation system may further include various components in addition to the components illustrated in FIG. 1, or some of the above-described components may be omitted.

The module management apparatus 100 may be an apparatus for managing the module control devices 200 included in the photovoltaic power generation system. The module management apparatus 100 may communicate with each of the module control devices 200 to transmit and receive various data necessary for managing the module control devices 200. The module management apparatus 100 may be a type of master unit for managing the module control devices 200.

For example, the module management apparatus 100 may communicate with the module control devices 200 through power line communication (PLC). However, the method for communication between the module management apparatus 100 and the module control devices 200 is not limited to PLC.

The module management apparatus 100 may transmit a monitoring request signal to the module control devices 200. In this regard, the monitoring request signal may include a command requesting information related to the photovoltaic modules 300. For example, the module management apparatus 100 may generate a monitoring request signal periodically. For example, the module management apparatus 100 may determine a target of the monitoring request signal (e.g., an object to be monitored) from among the photovoltaic modules 300 according to a preset order.

The module management apparatus 100 may receive monitoring signals transmitted from the module control devices 200 in response to the monitoring request signal. The module management apparatus 100 may collect and store the monitoring signals. In this regard, the monitoring signals may include information related to the photovoltaic modules 300 detected by the module control devices 200.

For example, information related to the photovoltaic modules 300 may include at least one of current, voltage, and temperature information of each of the photovoltaic modules 300. However, the information related to the photovoltaic modules 300 is not limited to what has been described above. The information related to the photovoltaic modules 300 may include various information that affects the power generation performance of the photovoltaic modules 300. For example, the monitoring signals may be used to manage the photovoltaic power generation system.

The module management apparatus 100 may transmit a rapid shutdown (RSD) signal to the module control devices 200. In this regard, the RSD signal may include a command that rapidly shuts down at least one of the photovoltaic modules 300. For example, the RSD signal may include a command that operates (opens) a circuit breaker connected to each of the photovoltaic modules 300. The commands included in the RSD signal are not limited to what has been described above. For example, the RSD signal may include various commands to satisfy the RSD requirements for photovoltaic power generation systems specified in the National Electric Code (NEC) standard.

The module management apparatus 100 may receive a warning signal transmitted from an external device 10. The module management apparatus 100 may generate an RSD signal in case that a warning signal is received. In this regard, the external device 10 may include at least one of a power control system (PCS) 11 and an input device 12.

The PCS 11 may be a device configured to control an inverter connected to the photovoltaic modules 300. For example, the PCS 11 may be configured to generate a warning signal on the basis of a status of the inverter.

The input device 12 may be a type of emergency switch (e.g., a button) capable of receiving a user input. For example, the input device 12 may be configured to generate a warning signal in case that a user input is received. However, the external device 10 is not limited to what has been described above, and may include various devices capable of determining the abnormality of the photovoltaic modules 300. For example, the module management apparatus 100 may receive a warning signal transmitted from the external device 10 through wired or wireless communication.

The module management apparatus 100 may receive a warning stop signal transmitted from the external device 10. In some embodiments, the module management apparatus 100 may generate an RSD release signal in case that the warning stop signal is received.

For example, the PCS 11 may be configured to generate a warning stop signal on the basis of the status of the inverter. In some embodiments, the input device 12 may be configured to generate a warning stop signal in case that a user input is received.

For example, the module management apparatus 100 may transmit an RSD release signal to at least one of the module control devices 200. In this regard, the RSD release signal may include a command releasing the RSD being performed on at least one of the photovoltaic modules 300. For example, the RSD release signal may include a command stopping the operation of a circuit breaker connected to each of the photovoltaic modules 300 (a command activating a circuit breaker). However, the commands included in the RSD release signal are not limited to what has been described above.

The module control devices 200 may be devices for managing the photovoltaic modules 300. The module control devices 200 may be a type of slave unit managed by the module management apparatus 100. For example, the module control devices 200 may perform functions related to RSD, monitoring, power generation efficiency optimization, and the like. The module control devices 200 may also be referred to as monitoring devices, RSD devices, power generation efficiency optimization devices, module level power electronics (MLPE), or the like.

For example, the MLPE may also be a DC optimizer or a micro-inverter.

In an embodiment, in case that the MLPE is a DC optimizer, a single DC optimizer may be connected to a single photovoltaic module 300. In some embodiments, the DC optimizer may be connected to an inverter. In this regard, the DC optimizer may be configured to optimize power output from the photovoltaic module 300 and to output the power to an inverter (e.g., a string inverter). The current converted by the inverter (e.g., conversion of direct current to alternating current) may be output to a load or a power grid.

In other embodiments, in case that the MLPE is a micro-inverter, a single micro-inverter may be connected to a single photovoltaic module 300. In this regard, the micro-inverter may convert power generated from the photovoltaic module 300, and the converted current may be output to a load or a power grid.

The module control devices 200 may receive a monitoring request signal transmitted from the module management apparatus 100. For example, in case that the monitoring request signal is received, the module control devices 200 may be configured to detect information related to the photovoltaic modules 300 and to transmit the detected information to the module management apparatus 100.

For example, the module control devices 200 may be configured to receive an RSD signal transmitted from the module management apparatus 100. in case that the RSD release signal is received, the module control devices 200 may perform RSD of at least one of the photovoltaic modules 300.

For example, the module control devices 200 may turn on the circuit breaker connected to each of the photovoltaic modules 300 to disconnect the power of the photovoltaic modules 300, thereby performing RSD. However, RSD means and methods are not limited to what has been described. The module control devices 200 may perform RSD of the photovoltaic modules 300 by using various means and methods to satisfy the RSD requirements for photovoltaic power generation systems specified in the NEC standard.

For example, the module control devices 200 may receive an RSD release signal transmitted from the module management apparatus 100. in case that the RSD release signal is received, the module control devices 200 may release the RSD being performed on any one of the photovoltaic modules 300. For example, the module control devices 200 may turn off the circuit breaker connected to each of the photovoltaic modules 300 to recover the power of the photovoltaic modules 300, thereby releasing the RSD.

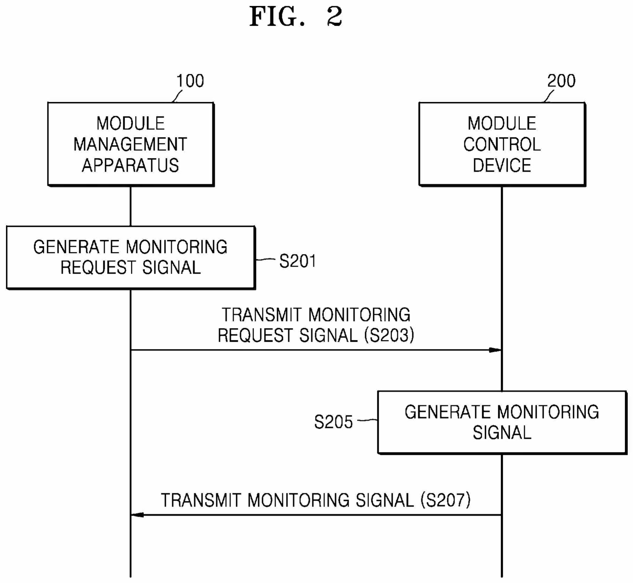

FIGS. 2 to 4 are flowcharts illustrating examples of communication processes of a photovoltaic power generation system according to an embodiment.

FIG. 2 is a first flowchart illustrating a communication process of a photovoltaic power generation system according to an embodiment.

A process of performing monitoring of the photovoltaic modules 300 by a photovoltaic power generation system will be described with reference to FIG. 2.

The module management apparatus 100 may generate a monitoring request signal. For example, the module management apparatus 100 may generate a monitoring request signal periodically (S201).

The module management apparatus 100 may transmit the monitoring request signal to each of the module control devices 200 (S203).

The module control devices 200 may generate monitoring signals in response to the receipt of the monitoring request signal (S205). For example, the module control devices 200 may generate monitoring signals on the basis of the results of monitoring the photovoltaic modules 300.

Subsequently, the module control devices 200 may transmit the monitoring signals to the module management apparatus 100 (S207).

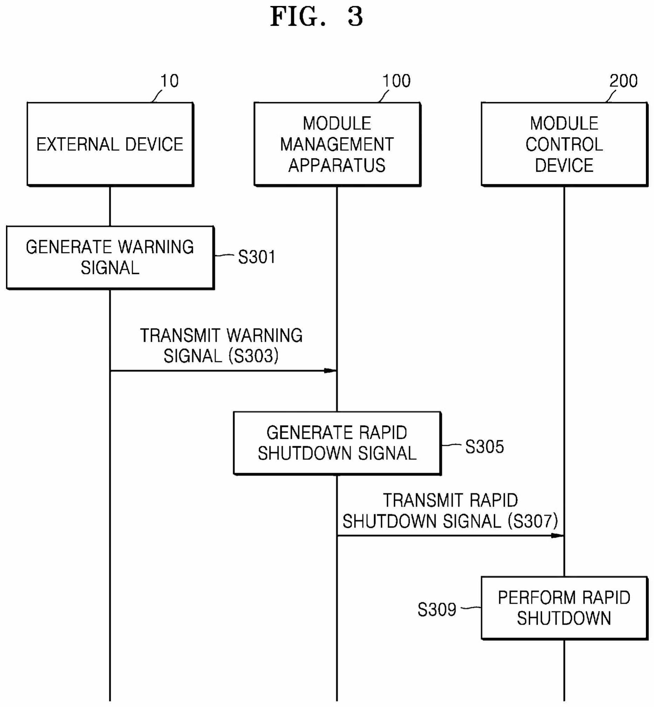

FIG. 3 is a second flowchart illustrating a communication process of a photovoltaic power generation system according to an embodiment.

A process of performing RSD of the photovoltaic module 300 by a photovoltaic power generation system will be described with reference to FIG. 3.

The external device 10 may generate a warning signal (S301). In an embodiment, the external device 10 may generate a warning signal when an abnormality occurs in an inverter. In other embodiments, the external device 10 may generate a warning signal in case that a user input is received.

The external device 10 may transmit a warning signal to the module management apparatus 100 (S303).

The module management apparatus 100 may generate an RSD signal in response to the receipt of the warning signal (S305). For example, in case that the warning signal is received, the module management apparatus 100 may determine that there is a need to perform RSD of at least one of the photovoltaic modules 300, and generate an RSD signal.

The module management apparatus 100 may transmit the RSD signal to each of the module control devices 200 (S307).

The module management apparatus 100 may perform RSD in response to the receipt of the RSD signal (S309). For example, the module control devices 200 may turn on circuit breakers connected to the photovoltaic modules 300 to disconnect the power of the photovoltaic modules 300, thereby performing RSD.

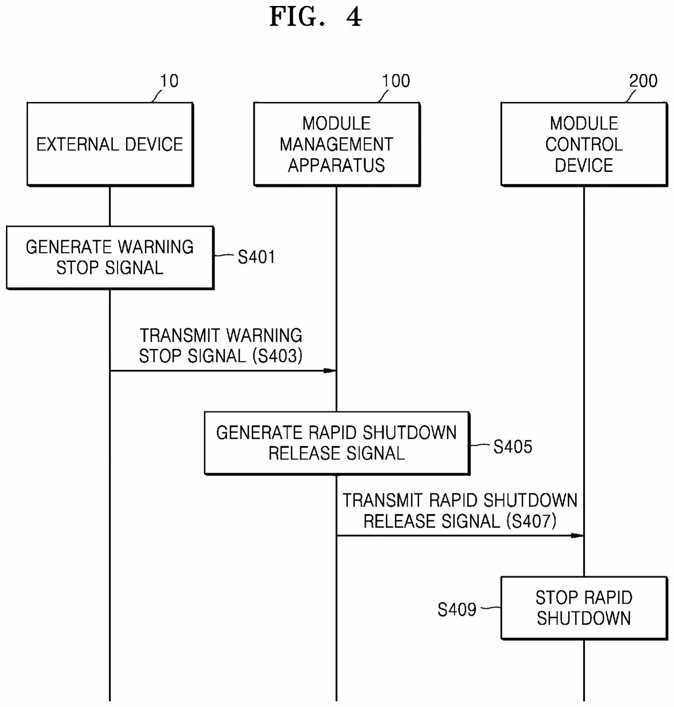

FIG. 4 is a third flowchart illustrating a communication process of a photovoltaic power generation system according to an embodiment.

A process of releasing RSD of a photovoltaic module by a photovoltaic power generation system will be described with reference to FIG. 4.

The external device 10 may generate a warning stop signal (S401). In an embodiment, when an abnormality that has occurred in the inverter is resolved, the external device 10 may generate a warning stop signal. In other embodiments, the external device 10 may generate a warning stop signal in case that a user input is received.

The external device 10 may transmit the warning stop signal to the module management apparatus 100 (S403).

The module management apparatus 100 may generate an RSD release signal in response to the receipt of the warning stop signal (S405). For example, in case that the warning stop signal is received, the module management apparatus 100 may determine that there is a need to perform RSD of the photovoltaic modules 300, and generate an RSD release signal.

The module management apparatus 100 may transmit the RSD release signal to each of the module control devices 200 (S407).

The module control devices 200 may stop the RSD being performed, in response to the receipt of the RSD release signal (S409). For example, the module control devices 200 may turn off circuit breakers connected to the photovoltaic modules 300 to recover the power of the photovoltaic modules 300, thereby stopping the RSD being performed.

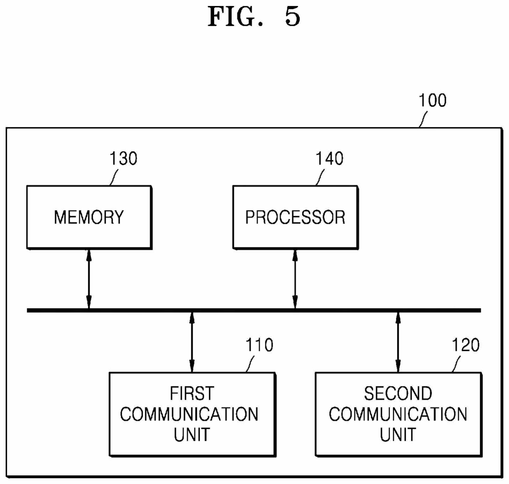

FIG. 5 is a diagram illustrating an example of the photovoltaic module management apparatus 100 according to an embodiment.

Referring to FIG. 5, the module management apparatus 100 may include a first communication unit 110, a second communication unit 120, a memory 130, and a processor 140. For example, the respective components included in the module management apparatus 100 may be connected to each other through a common bus, or may also be connected to each other through individual interfaces or individual buses with the processor 140 as the central element. The module management apparatus 100 according to an embodiment may further include various components in addition to the components illustrated in FIG. 5, or some of the above-described components may be omitted. In some embodiments, the first communication unit 110 and the second communication unit 120 may be a single communication module.

The first communication unit 110 may be a device configured to communicate with the external device 10. For example, the first communication unit 110 may be configured to communicate with the external device 10 according to various types of communication methods. The first communication unit 110 may include a communication modem configured to support wired or wireless communication with the external device 10.

The second communication unit 120 may be a device configured to communicate with the module control devices 200 connected to the photovoltaic modules 300. For example, the second communication unit 120 may be configured to communicate with at least one of the module control devices 200 according to various types of communication methods. The second communication unit 120 may include a communication modem configured to support PLC.

Various information required during the operation of the processor 140 may be stored in the memory 130. In addition, various information generated during the operation of the processor 140 may be stored in the memory 130.

The processor 140 may be connected to the first communication unit 110, the second communication unit 120, and the memory 130. For example, the processor 140 may also be implemented as a central processing unit (CPU), a micro controller unit (MCU), or a system on chip (SoC). In some embodiments, the processor 140 may be configured to run an operating system or an application to control a plurality of pieces of hardware or software connected to the processor 140. In some embodiments, the processor 140 may be configured to perform various data processing and computations. In some embodiments, the processor 140 may be configured to execute at least one of commands stored in the memory 130, and to store data generated as a result of execution in the memory 130.

For example, the processor 140 may be configured to generate a monitoring request signal according to a preset period and transmit the monitoring request signal through the second communication unit 120. In some embodiments, the processor 140 may receive a warning signal received from the external device 10 through the first communication unit 110. In some embodiments, in case that the warning signal is received through the first communication unit 110, the processor 140 may stop the generation and transmission of the monitoring request signal, and then generate an RSD signal.

For example, the processor 140 may be configured to transmit the RSD signal to the module control devices 200 through the second communication unit 120. The processor 140 may be configured to transmit the RSD signal to the module control devices 200 by using a broadcasting method. The broadcasting method as described herein may refer to a method of transmitting data simultaneously to all the module control devices 200 connected to a shared transmission medium (e.g., power line) of a photovoltaic power generation system.

For example, after the transmission of the RSD signal is completed, the processor 140 may resume the generation and transmission of the monitoring request signal which has been stopped.

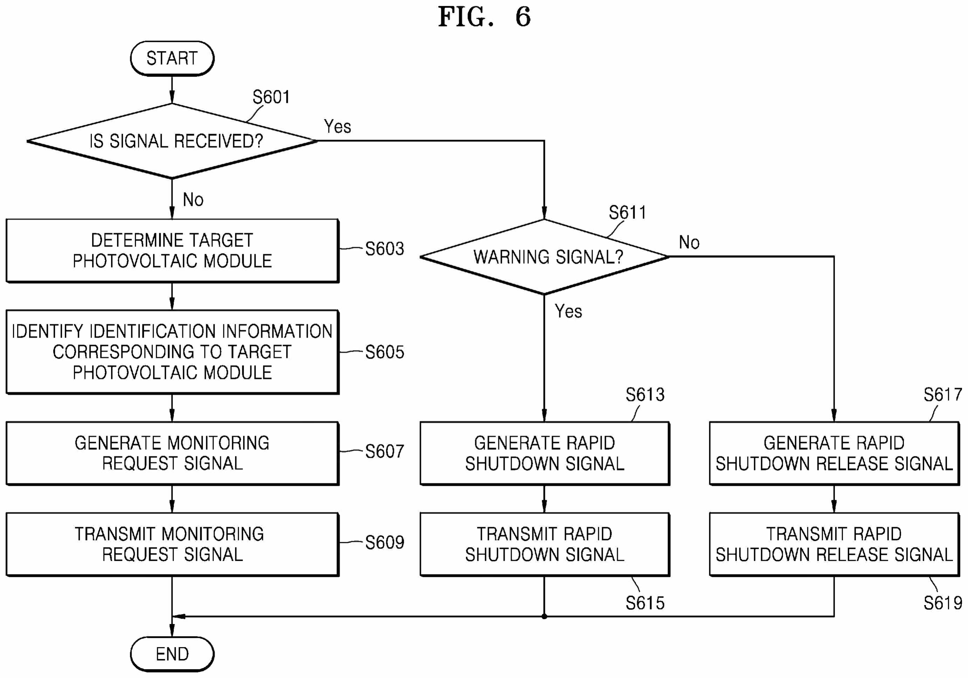

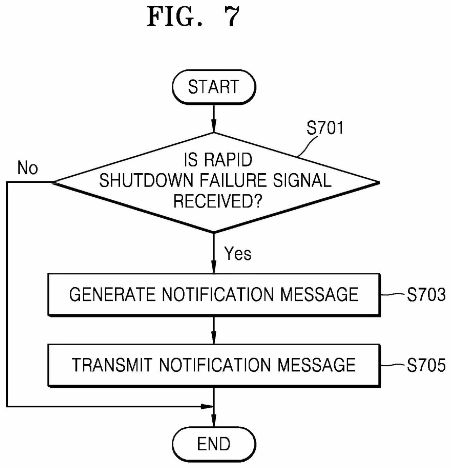

FIGS. 6 and 7 are flowcharts illustrating examples of a method of controlling a photovoltaic module management apparatus, according to an embodiment.

FIG. 6 is a first flowchart illustrating a method of controlling a module management apparatus, according to an embodiment.

The method of controlling the module management apparatus 100 will be described with reference to FIG. 6. However, some of the operations illustrated in FIG. 6 may be performed in an order different from that illustrated in FIG. 6, or may be omitted.

The processor 140 may determine whether a signal is received through the first communication unit 110 (S601). In operation S601, the processor 140 may check whether a warning signal or a warning release signal is received from the external device 10. For example, the processor 140 may perform operation S601 according to a preset period.

In case that a signal is not received through the first communication unit 110, the processor 140 may determine a target photovoltaic module according to a preset order (S603). In other words, the processor 140 may determine an object to be monitored from among the photovoltaic modules 300. For example, the order of determination of a target photovoltaic module may be preset by considering the position, connection structure and the like of the photovoltaic modules 300.

The processor 140 may identify identification information (e.g., an identification number) of a module control device connected to the target photovoltaic module (S605). For example, the identification information of a module control device and relationship information about a matched photovoltaic module may be pre-stored in the memory 130. Accordingly, the processor 140 may detect, from the memory 130, the identification information of a module control device corresponding to the target photovoltaic module.

The processor 140 may generate a monitoring request signal including the identification information of a module control device (S607).

The processor 140 may transmit the monitoring request signal through the second communication unit 120 (S609).

In case that a signal is received through the first communication unit 110, the processor 140 may determine whether the received signal is a warning signal (S611). In operation S611, the processor 140 may check whether the signal received through the first communication unit 110 is a warning signal.

In case that the signal received through the first communication unit 110 is a warning signal, the processor 140 may generate an RSD signal (S613). For example, in case that the warning signal is received through the first communication unit 110, the processor 140 may determine that there is a need to perform RSD of at least one of the photovoltaic modules 300, and generate an RSD signal.

The processor 140 may transmit the RSD signal through the second communication unit 120 (S615). In operation S615, the processor 140 may broadcast the RSD signal to all the module control devices 200 included in the photovoltaic power generation system. Through the transmission of the RSD signal to all the module control devices 200 by using a broadcasting method, the time required to propagate the RSD signal may be reduced. Therefore, RSD may be quickly performed on at least one of the photovoltaic modules 300.

In case that the signal received through the first communication unit 110 is not a warning signal, the processor 140 may generate an RSD release signal (S617). For example, in case that the signal received through the first communication unit 110 is a warning release signal, the processor 140 may generate an RSD release signal.

The processor 140 may transmit the RSD release signal through the second communication unit 120 (S619). In operation S619, the processor 140 may broadcast the RSD release signal to all the module control devices 200 included in the photovoltaic power generation system.

Although it has been described that the RSD signal or the RSD release signal is transmitted by a broadcasting method, the present disclosure is not limited thereto. For example, the module management apparatus 100 may also transmit the RSD signal or the RSD release signal by using a unicasting or multicasting method.

FIG. 7 is a second flowchart illustrating a method of controlling a module management apparatus, according to an embodiment.

The method of controlling the module management apparatus 100, according to an embodiment, will be described with reference to FIG. 7. The process illustrated in FIG. 7 may be performed after the transmission of the RSD signal. Some of the operations described below with reference to FIG. 7 may be performed in an order different from that illustrated in FIG. 7 or may be omitted.

The processor 140 may determine whether an RSD failure signal is received through the second communication unit 120 (S701). For example, the RSD failure signal may be a signal set to be generated by the module control devices 200 in case that RSD is not performed normally on the photovoltaic modules 300.

In case that the RSD failure signal is received through the second communication unit 120, the processor 140 may generate a notification message (S703). For example, in case that the RSD failure signal is received, the processor 140 may generate a notification message to notify an administrator of the fact.

The processor 140 may transmit the notification message to a preset user terminal (S705). For example, the processor 140 may notify an administrator of RSD failure by transmitting the notification message to a user terminal of the administrator. In some embodiments, the processor 140 may transmit the notification message to a user terminal through the first communication unit 110 or a separate communication device. The processor 140 may also output a warning signal to the surroundings through an output interface (e.g., a speaker, a display, an LED, or the like) in response to the receipt of the RSD failure signal.

Although it has been described that the notification message is transmitted to a user terminal by the module control devices 200, the present disclosure is not limited thereto. For example, the notification message may also be transmitted to a user terminal by the PCS 11.

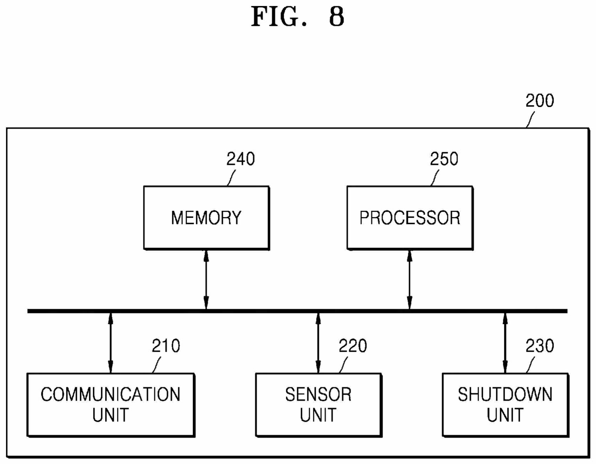

FIG. 8 is a diagram illustrating an example of the photovoltaic module control device 200 according to an embodiment.

Referring to FIG. 8, the module control device 200 may include a communication unit 210, a sensor unit 220, a shutdown unit 230, a memory 240, and a processor 250. For example, the respective components included in the module control device 200 may be connected to each other through a common bus, or may also be connected to each other through individual interfaces or individual buses with the processor 250 as the central element. The module control device 200 may further include various components in addition to the components illustrated in FIG. 8, or some of the components illustrated in FIG. 8 may be omitted.

The communication unit 210 may be a device configured to communicate with the module management apparatus 100. The communication unit 210 may be configured to communicate with the module management apparatus 100 according to various types of communication methods. For example, the communication unit 210 may include a communication modem configured to support PLC.

The sensor unit 220 may be a device configured to detect a status of the photovoltaic module 300. The sensor unit 220 may include at least one sensor. For example, the sensor unit 220 may include at least one of a temperature sensor, a current sensor, and a voltage sensor. However, the types of sensors included in the sensor unit 220 are not limited to what has been described above. The sensor unit 220 may be configured to detect various information that affects the power generation performance of the photovoltaic module 300, such as the temperature, current, voltage, and the like of the photovoltaic module 300.

The shutdown unit 230 may be a device configured to perform RSD. For example, the shutdown unit 230 may include a circuit breaker configured to disconnect power in photovoltaic power generation. The shutdown unit 230 may include various means to satisfy the RSD requirements for photovoltaic power generation systems specified in the NEC standard.

Various information required during the operation of the processor 250 may be stored in the memory 240. In some embodiments, various information obtained during the operation of the processor 250 may be stored in the memory 240.

The processor 250 may be connected to the communication unit 210, the sensor unit 220, the shutdown unit 230, and the memory 240. For example, the processor 250 may also be implemented as a CPU, an MCU, or a SoC. In some embodiments, the processor 250 may be configured to run an operating system or an application to control a plurality of pieces of hardware or software connected to the processor 250. In some embodiments, the processor 250 may perform various data processing and computations. In some embodiments, the processor 250 may be configured to execute at least one of commands stored in the memory 240, and to store data generated as a result of execution in the memory 240.

For example, the processor 250 may be configured to receive a signal transmitted from the module management apparatus 100 through the communication unit 210. In some embodiments, the processor 250 may be configured to identify the type of received signal in case that a signal is received through the communication unit 210. In some embodiments, in case that a monitoring request signal is received, the processor 250 may detect a status of the photovoltaic module 300 through the sensor unit 220.

For example, the processor 250 may generate a monitoring signal on the basis of the status of the photovoltaic module 300. The processor 250 may be configured to transmit the monitoring signal to the module management apparatus 100 through the communication unit 210.

For example, when an RSD signal is received, the processor 250 may perform RSD of the photovoltaic module 300 through the shutdown unit 230. In some embodiments, in case that an RSD release signal is received, the processor 250 may release the RSD that has been performed through the shutdown unit 230.

The processor 250 may be configured to generate a monitoring signal in case that a monitoring request signal is received, regardless of whether the RSD has been performed on the photovoltaic module 300. The processor 250 may be configured to generate a monitoring signal and transmit the monitoring signal to the module management apparatus 100 in case that a monitoring request signal is received, even when RSD is being performed on the photovoltaic module 300. As such, the photovoltaic module 300 may be monitored even when RSD is being performed on the photovoltaic module 300.

For example, in case that a monitoring request signal is not received again within a preset time period from a time point when the monitoring request signal transmitted from the module management apparatus 100 is received through the communication unit 210, the processor 250 may perform RSD of the photovoltaic module 300 through the shutdown unit 230. in case that a monitoring request signal is not received again within a predetermined time period from the previous time point of receipt of the monitoring request signal, the processor 250 may determine that there is an abnormality in the module management apparatus 100 or communication line, and perform RSD of the photovoltaic module 300.

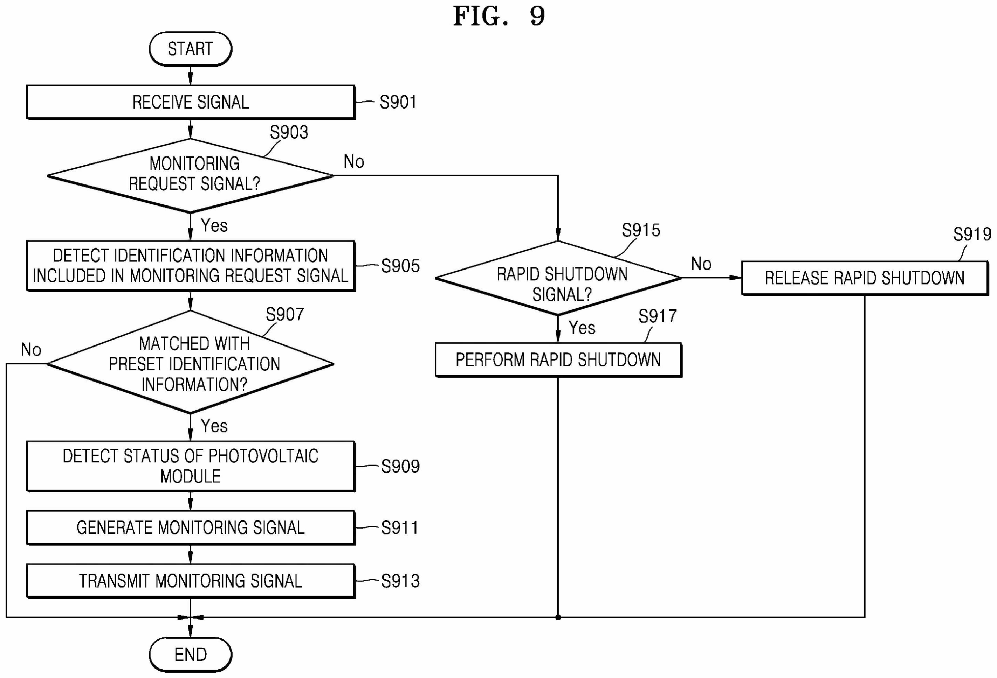

FIGS. 9 to 11 are flowcharts illustrating examples of a method of controlling a photovoltaic module control device, according to an embodiment.

FIG. 9 is a first flowchart illustrating a method of controlling a module control device, according to an embodiment.

The method of controlling the module control device 200 will be described with reference to FIG. 9. However, some of the operations illustrated in FIG. 9 may be performed in an order different from that illustrated in FIG. 9, or may be omitted.

The processor 250 may receive a signal through the communication unit 210 (S901).

The processor 250 may determine whether the signal received through the communication unit 210 is a monitoring request signal (S903). In operation S903, the processor 250 may check whether the signal received through the communication unit 210 is a monitoring request signal.

In case that the signal received through the communication unit 210 is a monitoring request signal, the processor 250 may detect identification information included in the monitoring request signal (S905). In operation S905, the processor 250 may check the identification information included in the monitoring request signal by analyzing the monitoring request signal.

The processor 250 may determine whether the identification information detected in operation S905 matches preset identification information (S907). In this regard, the preset identification information may be identification information of the module control device 200. In operation S907, the processor 250 may determine whether the identification information included in the monitoring request signal matches the identification information thereof. In operation S907, the processor 250 may determine whether the monitoring request signal received through the communication unit 210 targets the photovoltaic modules 300 connected to the processor 250.

In case that the identification information detected in operation S905 does not match the preset identification information, the processor 250 may terminate the process. On the other hand, in case that the identification information detected in operation S905 matches the preset identification information, the processor 250 may detect the status of the photovoltaic module 300 through the sensor unit 220 (S909).

The processor 250 may generate a monitoring signal including information about the status of the photovoltaic module 300 (S911). In operation S911, the processor 250 may generate a monitoring signal by including the preset identification information (i.e., the identification information of the processor 250) together with information about the status of the photovoltaic module 300.

The processor 250 may transmit the monitoring signal to the module management apparatus 100 through the communication unit 210 (S913). In operation S913, the processor 250 may transmit the result of detecting the status of the photovoltaic module 300 to the module management apparatus 100 through the sensor unit 220.

In case that the signal received through the communication unit 210 is not a monitoring request signal, the processor 250 may determine whether the signal received through the communication unit 210 is an RSD signal (S915). In operation S915, the processor 250 may check whether the signal received through the communication unit 210 is an RSD signal.

In case that the signal received through the communication unit 210 is an RSD signal, the processor 250 may perform RSD of the photovoltaic module 300 through the shutdown unit 230 (S917). In operation S917, the processor 250 may stop power generation by the photovoltaic module 300 by performing RSD of the photovoltaic module 300 through the shutdown unit 230.

On the other hand, in case that the signal received through the communication unit 210 is not an RSD signal, the processor 250 may release the RSD that has been performed through the shutdown unit 230 (S919). For example, in case that the signal received through the communication unit 210 is an RSD release signal, the processor 250 may release the RSD of the photovoltaic module 300, thereby enabling the photovoltaic module 300 to generate power again.

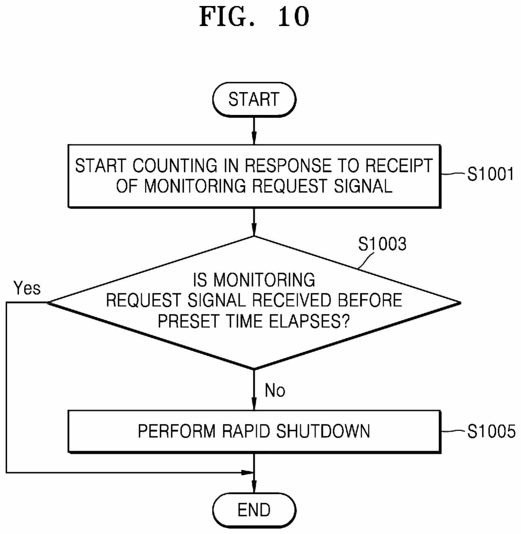

FIG. 10 is a second flowchart illustrating a method of controlling a module control device, according to an embodiment.

The method of controlling the module control device 200 will be described with reference to FIG. 10. For example, the process of FIG. 10 may be performed in parallel to the process of FIG. 9. However, some of the operations illustrated in FIG. 10 may be performed in an order different from that illustrated in FIG. 10 or may be omitted.

The processor 250 may count time in response to the receipt of the monitoring request signal (S1001). In operation S1001, the processor 250 may start counting on the basis of a time point of the receipt of the monitoring request signal.

The processor 250 may determine whether the monitoring request signal is received again before the counted time elapses a preset time (S1003). In operation S1003, the processor 250 may determine whether the monitoring request signal is received again within a preset time period from the time point of receipt of the monitoring request signal.

In case that the monitoring request signal is received again before the counted time elapses the preset time, the processor 250 may terminate the process. For example, in case that the monitoring request signal is received again before the counted time elapses the preset time, the processor 250 may determine that there is no abnormality in the module management apparatus 100 and communication line.

On the other hand, in case that the monitoring request signal is not received again before the counted time elapses the preset time, the processor 250 may perform RSD of the photovoltaic module 300 through the shutdown unit 230 (S1005). Therefore, when an abnormality (e.g., occurrence of abnormal situations such as fire) occurs in the module management apparatus 100 or communication line, it is possible to prevent the occurrence of damage that results from failure of the RSD of the photovoltaic module 300.

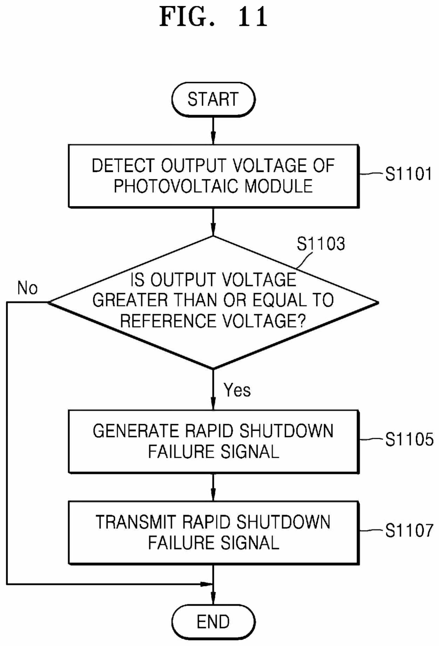

FIG. 11 is a third flowchart illustrating a method of controlling the module control device 200, according to an embodiment.

The method of controlling the module control device 200 will be described with reference to FIG. 11. For example, the process of FIG. 11 may be performed after the RSD of the photovoltaic module 300 is performed. However, some of the operations illustrated in FIG. 11 may be performed in an order different from that illustrated in FIG. 11 or may be omitted.

The processor 250 may detect an output voltage of the photovoltaic module 300 through the sensor unit 220 (S1101).

The processor 250 may determine whether the output voltage of the photovoltaic module 300 is greater than or equal to a preset reference voltage (S1103). For example, the processor 250 may check whether RSD is performed normally by using the output voltage of the photovoltaic module 300.

In case that the output voltage of the photovoltaic module 300 is less than the reference voltage, the processor 250 may determine that RSD is performed normally and terminate the process. On the other hand, in case that the output voltage of the photovoltaic module 300 is greater than or equal to the reference voltage, the processor 250 may generate an RSD failure signal (S1105). For example, in case that the output voltage of the photovoltaic module 300 is greater than or equal to the reference voltage, the processor 250 may determine that RSD is not performed normally and generate an RSD failure signal.

The processor 250 may transmit the RSD failure signal to the module management apparatus 100 through the communication unit 210 (S1107).

As described above, in case that RSD is not performed normally on the photovoltaic module 300, the module control device 200 may immediately notify an administrator of the fact. This may allow an administrator to quickly take action on the situation.

Although it has been described that the output voltage of the photovoltaic module 300 is used to check whether RSD is performed normally on the photovoltaic module 300, the present disclosure is not limited thereto. For example, an output current of the photovoltaic module 300 may also be used instead of the output voltage of the photovoltaic module 300. In other embodiments, the module control device 200 may also determine whether RSD is performed normally on the photovoltaic module 300 by considering both the output voltage and the output current of the photovoltaic module 300.

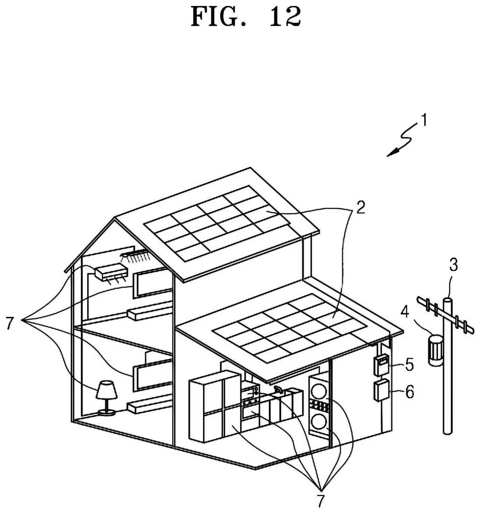

FIG. 12 is a view illustrating an example of a power supply structure of a building in which photovoltaic modules are installed, according to an embodiment.

Referring to FIG. 12, a plurality of photovoltaic modules 2 may be installed to generate power. The plurality of photovoltaic modules 2 may be connected to each other, thereby forming a photovoltaic module array.

An inverter 6 may be configured to convert power generated from the photovoltaic modules 2 and supply the converted generated power into a building 1.

In some embodiments, commercial power transmitted through a power line 3 may be supplied to the building through a transformer 4.

A plurality of home appliances 7 may be operated by selectively receiving a supply from at least one of commercial power or power generated by the photovoltaic modules 2. A power meter 5 may be configured to measure the amount of power consumed by the building 1.

In some embodiments, in case that the building 1 includes a separate energy storage system (ESS), power generated from the photovoltaic modules 2 may be stored in the ESS.

In case that the plurality of photovoltaic modules 2 are connected to each other, a photovoltaic module array may be formed. The photovoltaic module array, which is an assembly of a plurality of photovoltaic modules, may include a single output terminal.

In some embodiments, the photovoltaic module 2 may include MLPE.

For example, the MLPE may be configured to monitor the status or generated power amount of the photovoltaic module 2 and to transmit data to the external device. In some embodiments, the MLPE may perform RSD and stop the operation of the photovoltaic module 2 according to the degree of failure of the photovoltaic module 2.

In some embodiments, at least one of the photovoltaic module 2 and the MLPE may include a communication module for PLC.

The above-described methods may be written as a program that can be executed on a computer, and may be implemented on a general-purpose digital computer that operates the program by using a computer-readable recording medium. In addition, the structure of data used in the above-described methods may be recorded on a computer-readable recording medium through various means. The computer-readable recording medium includes storage media such as magnetic storage media (e.g., ROM, RAM, USB, floppy disk, hard disk, and the like) and optical readable media (e.g., CD-ROM, DVD, and the like).

It will be understood by those of ordinary skill in the art related to the embodiments that the present disclosure may be implemented in a modified form without departing from the essential characteristics of the foregoing description. Therefore, the disclosed methods should be considered in an illustrative sense rather than a restrictive sense, and the scope of the present disclosure is set forth in the claims rather than in the foregoing description, and should be construed as including all differences falling within the scope equivalent thereto. The implementations described herein may be carried out, for example, as a method or process, a device, a software program, a data stream or a signal. Even in case that discussed only in the context of a single form of implementation (e.g., discussed only as a method), the implementation of the discussed feature may also be implemented in other forms (e.g., as a device or a program). The device may be implemented with appropriate hardware, software, firmware, and the like. The method may be implemented in a device such as a processor, which generally refers to a processing device including, for example, a computer, a microprocessor, an integrated circuit, or a programmable logic device. The processor also includes communication devices, such as computers, cell phones, personal digital assistants (PDAs), and other devices that facilitate communication of information between end-users.

## Claims

1. A device comprising:
a communication unit configured to communicate with an external device;
a shutdown unit configured to perform rapid shutdown of a photovoltaic module; and
a processor connected to the communication unit and the shutdown unit,
wherein the processor is configured to identify a type of signal received through the communication unit, and to control the shutdown unit to perform rapid shutdown of the photovoltaic module in case that the type of signal is a rapid shutdown signal.

2. The device of claim 1, further comprising
a sensor unit configured to detect a status of the photovoltaic module, wherein the processor is configured to generate a monitoring signal on the basis of the status of the photovoltaic module detected through the sensor unit in case that the type of signal is a monitoring request signal, and to transmit the monitoring signal through the communication unit.

3. The device of claim 2, wherein
the processor is configured to detect identification information included in the monitoring request signal, and to generate the monitoring signal in case that the detected identification information matches preset identification information.

4. The device of claim 2, wherein
the processor is configured to generate the monitoring signal in response to the monitoring request signal, regardless of whether rapid shutdown is performed on the photovoltaic module.

5. The device of claim 2, wherein
the processor is configured to control the shutdown unit to perform rapid shutdown of the photovoltaic module in case that the monitoring request signal is not received again within a preset time period from a time point when the monitoring request signal is received.

6. The device of claim 1, wherein
the photovoltaic module control device is module level power electronics.

7. The device of claim 1, wherein
the photovoltaic module control device comprises a DC optimizer or a micro-inverter.

8. An apparatus for managing a photovoltaic module control device, the apparatus comprising:
a first communication unit configured to communicate with an external device;
a second communication unit configured to communicate with a plurality of photovoltaic module control devices; and
a processor connected to the first and second communication units,
wherein the processor is configured to: generate a monitoring request signal according to a preset period and transmit the monitoring request signal through the second communication unit; and in case that a warning signal is received through the first communication unit, stop the generation and transmission of the monitoring request signal,
generate a rapid shutdown signal, and transmit the rapid shutdown signal through the second communication unit.

9. The apparatus of claim 8, wherein
the external device comprises at least one of a power control system configured to control an inverter connected to photovoltaic modules and an input device configured to receive a user input.

10. The apparatus of claim 8, wherein
the processor is configured to determine a target photovoltaic module according to a preset order and to generate the monitoring request signal comprising identification information corresponding to the target photovoltaic module.

11. The apparatus of claim 8, wherein
the processor is configured to resume the generation and transmission of the monitoring request signal after the transmission of the rapid shutdown signal is completed.

12. The apparatus of claim 8, wherein
the processor is configured to transmit the rapid shutdown signal by using a broadcasting method.

13. The apparatus of claim 8, wherein
the photovoltaic module control device comprises module level power electronics.

14. The apparatus of claim 8, wherein
the photovoltaic module control device comprises a DC optimizer or a micro-inverter.

15. A method of controlling a photovoltaic module management apparatus,
the method comprising:
generating a monitoring request signal according to a preset period and transmitting the monitoring request signal to a photovoltaic module control devices;
stopping the generation and transmission of the monitoring request signal in case that a warning signal is received from an external device, and generating a rapid shutdown signal; and
transmitting the rapid shutdown signal to a plurality of photovoltaic module control devices.

16. The method of claim 15, wherein
the external device comprises at least one of a power control system configured to control an inverter connected to photovoltaic modules and an input device configured to receive a user input.

17. The method of claim 15, wherein
the generation of the monitoring request signal comprises:
determining a target photovoltaic module according to a preset order;
and
generating the monitoring request signal comprising identification information corresponding to the target photovoltaic module.

18. The method of claim 15, wherein
the generation and transmission of the monitoring request signal is resumed after the transmission of the rapid shutdown signal is completed.

19. The method of claim 15, wherein
the transmission of the rapid shutdown signal comprises transmitting the rapid shutdown signal by using a broadcasting method.
